# EUROPEAN PATENT APPLICATION

(11) **EP 1 872 852 A1**
(43) Date of publication of application: **02.01.2008**
(21) Application number: 05727925.9
(22) Date of filing: 30.03.2005
(51) Int. Cl.: B01J 29/46, B01D 53/86, B01J 29/14, B01J 29/24, B01J 29/76, B01J 35/10

(54) **AMMONIA DECOMPOSITION CATALYST AND PROCESS FOR DECOMPOSITION OF AMMONIA USING THE CATALYST**

(71) Applicant: Sued-Chemie Catalysts Japan, Inc., Shibuya-ku, Tokyo 151-0053 (JP)
(72) Inventor: Shioya, Yasushi, Technical Laboratory, Fuchuma-chi, Nei-gun, Toyama 9392753 (JP); Miyaki, Yoshiharu, Technical Laboratory, Fuchuma-chi, Nei-gun, Toyama 9392753 (JP)
(74) Representative: Smaggasgale, Gillian Helen
(86) International application number: PCT/JP2005/006029
(87) International publication number: WO 2006/103754

(57) **Abstract**

Disclosed is a catalyst useful for catalytic decomposition of high concentration ammonia, and also disclosed is a process for decomposing ammonia using the catalyst. As the ammonia decomposion catalyst, a catalyst which supports a metallic element selected from Fe, Co, Ni and Cu by ion exchange method on porous silica alumina having an Si/Al atomic ratio of 1 to 90 and a specific surface area of 200 to 900 m²/g and contains a noble metal selected from Ru, Rh, Pd, Ir and Pt in an amount of 10 to 500 ppm based on the total mass of the catalyst is useful.

## Description

### Technical Field

The present invention relates to an ammonia decomposition catalyst useful for making of an ammonia-containing waste gas harmless, particularly an ammonia decomposition catalyst which decomposes a high concentration of ammonia contained in a waste gas generated in an apparatus of semiconductor production, an apparatus of LCD production, or the like, as well as to a process for decomposition of ammonia using the catalyst.

### Background Art

Ammonia is used in production processes in semiconductor plant, blue ray diode plant, etc. Since ammonia-containing gases are combustible and harmful, it is not allowed to discharge an ammonia-containing waste gas per se into the air from the standpoint of environmental protection and it is necessary to make such a waste gas harmless in order to remove its danger and harmfulness.

The treatment of an ammonia-containing waste gas is a wet process, a combustion process or a dry process. In the wet process, the waste gas is washed with a chemical solution. In the combustion process, the waste gas is burnt at high temperatures using a burner or the like to convert it into a harmless gas. In the dry process, the waste gas is passed through a column packed with a solid treating agent or a decomposition catalyst, to be adsorbed by chemical interaction, adsorption and/or chemical reaction, between the to-be-treated gas and the treating agent, or to decompose the to-be-treated gas into a harmless substance by the action of the decomposition catalyst thereon. The dry process is employed generally in the treatment of waste gases containing metal hydride, halide and ammonia.

However, in the wet process, waste water contains ammonia and it is necessary to treat this waste water. In the combustion process, NOx is generated in the combustion of ammonia and its treatment becomes a problem.

Meanwhile, in the dry process, many techniques are known on the ammonia decomposition catalyst used for making ammonia harmless. For example, there are catalysts that contain copper oxide, chromium oxide, manganese oxide, iron oxide, palladium, platinum or the like (Patent Literature 1, JP-A-1999-042422); that are impregnated with chromium, copper or cobalt on zeolite (Patent Literature 2, JP-A-1995-328440); and that contain a metal element of group 8 of periodic table (subgroup method) or/and a metal element of group 1B of periodic table (subgroup method) (Patent Literature 3, JP-A-1998-249165).

The decomposition catalyst comprising copper oxide, chromium oxide, manganese oxide, iron oxide, palladium or platinum is superior in ammonia decomposability; however, it generates nitrogen oxides such as N₂O, NO₂, NO and the like in a side reaction and has a problem from an environmental standpoint.

The decomposition catalyst of chromium, copper or cobalt supported on zeolite is intended for decomposition of ammonia while suppressing generation of nitrogen oxides as low as possible; however, the to-be-treated gas actually used in testing contained a very low concentration (30 ppm) of ammonia and also contained a very low concentration (2%) of oxygen. Thus, it only indicates that the decomposition catalyst is effective under considerably restricted conditions. The concentration of ammonia discharged at, for example, a plant for semiconductor production is very high such as several % by volume and the concentration of oxygen discharged simultaneously is close to that in air. Therefore, the generation of nitrogen oxides such as N₂O, NO₂, NO and the like is unavoidable using the above catalyst.

The catalyst containing a metal element of group 8 of periodic table (subgroup method) or/and a metal element of group 1B of periodic table (subgroup method) can decompose ammonia at low temperatures in the presence of hydrogen as a reducing agent and generates no nitrogen oxides; however, the presence of hydrogen is essential, which is disadvantageous in cost.

In order to solve the problems indicated above, the present inventors have proposed a catalyst which uses a porous silica alumina having particular properties as carrier on which at least one metal element selected from metal elements of group 8 to group 12 of periodic table is impregnated in the pores of the porous silica alumina by ion exchange method. (Patent Literature 4, WO 2005/018807 Pamphlet). This catalyst exhibits a sufficient capability in a SV range of 100 to 8,000 hr⁻¹. However, at a SV of 8,000 hr⁻¹ or above with the use of honeycomb, the effective temperature range becomes 350°C or more. It is desirable to have a catalyst which is effective even at a large volumetric flow of waste gas and at a low temperature zone from the stand point of energy saving.
Patent Literature 1: JP-A-1999-042422
Patent Literature 2: JP-A-1995-328440
Patent Literature 3: JP-A-1998-249165
Patent Literature 4: WO 2005/018807 Pamphlet

### Disclosure of the Invention

### Problems to be Solved by the Invention

Therefore, the present invention provides a catalyst which, in treating a waste gas containing a high concentration of ammonia generated in a semiconductor production process or the like, shows a high ability of decomposition without the presence of a reducing agent and yet generates no nitrogen oxides such as N₂O, NO₂, NO or the like, and a process for efficiently decomposing ammonia in a waste gas containing a high concentration of ammonia.

### Means to Solve the Problems

The present inventors made a study in order to solve the above task. As a result, they found that a catalyst having at least one metal element selected from Fe, Co, Ni and Cu, supported by ion exchange method in the pores of a porous silica alumina carrier having particular properties and further containing at least one noble metal element selected from Ru, Rh, Pd, Ir and Pt in a particular proportion can efficiently decompose a high concentration (percent order) of ammonia even at a high SV and even at a low temperature zone (350°C or below) while suppressing the generation of nitrogen oxides such as N₂O, NO₂, NO and the like. The finding has led to the completion of the present invention.

The present invention relates an ammonia decomposition catalyst used for catalytic decomposition of ammonia present in a gas containing 0.005 to 5% by volume of ammonia, characterized in that the catalyst comprises at least one metal element selected from Fe, Co, Ni and Cu (hereinafter refer to simply as "the metal element"), impregnated by ion exchange method on a porous silica alumina carrier which has an atomic Si/Al ratio of 1 to 90 and a specific surface area of 200 to 900 m²/g, and further comprises at least one noble metal element selected from Ru, Rh, Pd, Ir and Pt (hereinafter refer to simply as "the noble metal element") in an amount of 10 to 500 ppm based on the total mass of the catalyst.

In this ammonia decomposition catalyst, it is preferred that the content of the metal element is 0.05 to 10% by mass based on the total mass of the catalyst and the porous silica alumina has an average particle diameter of 0.1 to 20 µm.

The present invention is also a process for catalytic decomposition of ammonia contained in a gas at 0.005 to 5% concentration by volume, characterized in that the above mentioned catalyst is used.

### Best Mode for Carrying Out the Invention

There is no particular restriction as to the ammonia-containing gas to which the present invention is applicable. A waste gas generated in a semiconductor plant and the like or an ammonia-containing gas generated by stripping of ammonia-containing waste water can be mentioned as an example..

The ammonia concentration in the ammonia-containing gas to which the present invention is applicable, is ordinarily 50 ppm to 5% by volume, preferably 0.1 to 4% by volume.

When the catalyst of the present invention is contacted with an ammonia-containing gas and air, the ammonia in the gas is oxidatively decomposed into harmless nitrogen gas and water. The reaction proceeds as shown in the following formula (I).

4NH₃ + 3O₂ → 2N₂ + 6 H₂O (I)

While the reaction temperature in the above oxidative decomposition is determined appropriately depending upon the concentration of ammonia, the performance of catalyst, the contact time with catalyst, etc., it is generally considered appropriate in the range of 200 to 600°C, preferably 300 to 500°C.

The SV of the to-be-treated gas to which the present invention is applicable, is ordinarily 100 to 30,000 hr⁻¹, preferably 200 to 20,000 hr⁻¹, further preferably 400 to 10,000 hr⁻¹.

The porous silica alumina used in the present invention may be any porous silica alumina as long as it has an atomic Si/Al ratio of 1 to 90 and a specific surface area of 200 to 900 m²/g. It is appropriately selected from natural zeolite, synthetic zeolite, metaporous zeolite, etc. Incidentally, as specific examples of the zeolite, mordenite, erionite, cliptinolite, ZSM-5, Y type zeolite, β zeolite and MCM-41 can be mentioned.

The atomic Si/Al ratio of the porous silica alumina is 1 to 90, preferably 2 to 60. An atomic Si/Al ratio of more than 90 is not preferred because, with such a ratio, the number of ion exchange sites is reduced and the amount of metal element (active component) supported is less. An atomic Si/Al ratio of less than 1 is not preferred because, with such a ratio, there is no formation of micro-pores which constitute a zeolite structure.

The specific surface area of the porous silica alumina is 200 to 900 m²/g, preferably 300 to 700 m²/g. When it is less than 200 m²/g, no sufficient performance is exhibited. At above 900 m²/g, the porous silica alumina powder has a lower bulk density and its handling becomes difficult (for example, there is generation of dust), which is not preferred.

The average particle diameter of the porous silica alumina is preferably 0.1 to 20 µm. With an average particle diameter of more than 20 µm, the contact of the catalyst with ammonia tends to be insufficient and there is a possibility that no sufficient catalyst performance is exhibited.

The porous silica alumina is often synthesized as a sodium exchange type and, in the present invention, the sodium exchange type can be used without trouble. The sodium exchange type may be converted into a proton type by operation of ion exchange.

The porous silica alumina is also available on the market. The porous silica alumina is powdery and is used as granules obtained by grinding after pelletization of the powder. Preferably, the porous silica alumina used should have its average particle diameter of 0.1 to 20 µm.

The metal element supported on the porous silica alumina is selected from Fe, Co, Ni and Cu, and the noble metal element is selected from Ru, Rh, Pd, Ir and Pt. These may be used each singly or in combination.

The metal element is supported on the porous silica alumina by ion exchange method. With ordinary impregnation method, dipping method or spraying method, the metal element is not supported sufficiently in the pores of the porous silica alumina and the metal element is possibly to be deposited only on the outer surface of the carrier. In case of being supported on the outer surface, the metal particles aggregate and do not perform sufficiently.

The impregnation of the metal element into the porous silica alumina may be conducted by any of ordinary ion exchange method, impregnation method, dipping method, spraying method, etc.

The metal element is not particularly limited and is supported in the form of nitrate, sulfate, acetate, chloride, ammonium complex salt, etc.

The precursor for noble metal element is not particularly limited and may be used a chloride, a nitrate, a dinitrodiamine salt, an oxide, etc as raw material.

The content of the metal element component in the catalyst is desirably 0.05 to 10% by mass, preferably 0.1 to 5% by mass based on the total mass of the catalyst. In less than 0.05% by mass, ammonia decomposition tends to be insufficient. When it is more than 10% by mass, the catalyst performance not only declines but also becomes ineffective due to clogging of the pores of silica alumina.

The content of the noble metal element component in the catalyst is 10 to 500 ppm, preferably 50 to 250 ppm based on the total mass of the catalyst. When it is less than 50 ppm of the total mass of the catalyst, the catalyst performance becomes insufficient. When it is more than 500 ppm, the catalytic activity of the noble metal element itself becomes too high and the generation of NOx and N₂O as by-products becomes apparent. Also when the content of the noble metal element is more than 10% by mass based on the metal element, the catalytic activity of the noble metal element itself is too high and the generation of NOx and N₂O as by-products becomes significant.

The metal element can be supported on the porous silica alumina by ordinary ion exchange method.

The metal element component is supported on the powdery porous silica alumina by ion exchange method; the resulting material is impregnated with the noble metal element component; and the resulting powdery catalyst is kneaded and then subjected to extrusion or compression to form a shaped material. In this case, in order to get a required mechanical strength, an inorganic binder, for example, silica, alumina, magnesia or the like which is effective for strength improvement is added thereto as required. Since, in decomposition of an ammonia-containing gas, the to-be-treated gas is passed through the ammonia decomposition catalyst layer of a packed column, the above formation of shaped material is essential in order to reduce the pressure loss in the catalyst layer. Therefore, the shaped material may be crushed as necessary for use in a granular form. Or, the powdery catalyst may be used as wash-coating on a base material such as honeycomb. It is also possible that the porous silica alumina is pre-formed to a shaped material by extrusion or compression followed by crushing of the materials if necessary to be used in a granular form on which the metal element component are put on by ion exchange method and the noble metal element component by impregnation method. Honeycombs can be appropriately selected from cordierite, alumina, metals, etc., and the shape and size thereof can also be selected appropriately.

There is described about the process for decomposition of ammonia, which comprises contacting the ammonia decomposition catalyst of the present invention with an ammonia-containing gas.

The ammonia decomposition catalyst is packed in a stainless steel-made, flow type reactor; an ammonia-containing gas is passed through the reactor; and the catalyst layer is heated to 200 to 600°C to decompose the ammonia. The amount of gas passed is set at an optimum level depending upon the kind of catalyst, the shape of catalyst, and the temperature of catalyst layer; and it is ordinarily a SV of about 100 to 30,000 hr⁻¹, preferably a SV of 200 to 20,000 hr⁻¹, further preferably a SV of 400 to 10,000 hr⁻¹. Too high a catalyst layer temperature results in increased formation of nitrogen oxides, and too low a catalyst layer temperature results in insufficient decomposition of ammonia.

The catalyst layer temperature is preferred to be controlled at an optimum level by confirming the composition of gas at reactor outlet by analysis using a gas chromatograph or the like.

The amount of oxygen in the ammonia-containing gas is desired to be 0.75 mol or more for 1 mol of ammonia and is preferred to be ordinarily 2 mols or more. When the oxygen amount in the to-be-treated gas is insufficient, air, oxygen or the like is passed through the reactor together with the ammonia-containing gas or by adding it to the ammonia-containing gas. In that case, the total gas amount passed is preferably the same range as shown above.

### Examples

Hereinafter, the present invention will be described with reference to the Examples.

### (Evaluation of performance of ammonia decomposition catalyst)

It was conducted by measuring the decomposability of ammonia contained in the air.

The measurement was conducted using a normal-pressure flow type reactor. The reactor, the condition of measurement and the procedure of measurement are described as following:

### · Normal-pressure flow type reactor

Stainless steel-made square reactor: inner dimensions 50x50 mm, length 500 mm
Catalyst shape: 50x50x50 mm honeycomb, 200 cell size

### Condition of measurement

Amount of catalyst used: one honeycomb spread-coated with catalyst
Catalyst position: 200 mm from the bottom of reactor
Gas SV: 5,000 to 30,000 hr⁻¹
Reaction pressure: 100 kPa (about 1 atm.)
Reaction temperature: 200 to 600°C
Composition of reaction gas: ammonia 1% by volume in air

### Analysis of outlet gas

### a) NH₃ and N₂O

Apparatus: 164 type gas chromatograph (trade name), produced by Hitachi, Ltd.
Column: Porapak-Q, diameter 3 mm, length 3 m
Detector: Thermal Conductivity Detector
Gas: nitrogen gas, flow amount 30 ml/min
Sample: 1.0 ml

### b) NOx

Apparatus: CLA-510SS (trade name), produced by HORIBA, Ltd.

### (Evaluation of porous silica alumina)

### Measurement of Si/Al (atomic ratio)

Analyzed by ICP [ICPS-1000 (trade name) produced by Shimadzu Corporation].

### Measurement of specific surface area

Measured by a BET method based on N₂ adsorption.

### Average particle diameter

A porous silica alumina was dispersed in ion exchange water and was measured by a laser transmission method. Incidentally, the measurement of a shaped material was done by grinding the material with an agate mortar, followed by sifting through a 200-mesh sieve.

### (Analysis of metals in ammonia decomposition catalyst)

Analyzed by ICP [ICPS-1000 (trade name) produced by Shimadzu Corporation].

### Example 1

80 g of Cu(NO₃)₂·3H₂O (special grade chemical, produced by Wako Pure Chemical Industries, Ltd.) was dissolved in ion exchange water to obtain 1 liter of a solution. In this copper nitrate solution 500 g of a porous silica alumina "ZSM-5 Zeolite" (Si/Al molar ratio: 30, specific surface area: 580 m²/g, average particle diameter: 10 µm, product number: H-MFI-30, produced by SUED CHEMIE AG) was dispersed and stirred at room temperature for 24 hours to be ion-exchanged. The resulting porous silica alumina containing Cu occluded by ion exchange was collected by filtration, washed with ion exchange water to remove copper nitrate staying on the surface, and then calcined at 500°C for 12 hours. Thereafter, the resulting powder was impregnated with dinitrodiamine platinum, followed by calcining at 500°C for 12 hours, to obtain 490 g of an ammonia decomposition catalyst powder containing 3.0% by mass of copper and 100 ppm of Pt. This ammonia decomposition catalyst powder was deposited on a cordierite-made honeycomb by wash-coating method in an amount of 50 g per liter of the honeycomb. This was called honeycomb catalyst A. An alumina sol, used as binder, was added so that it became 10% by mass relative to the ammonia decomposition catalyst powder.

Honeycomb catalyst A was packed in the above-mentioned normal-pressure flow type reactor (stainless steel-made reactor). An ammonia-containing gas was passed through the reactor at given temperatures shown in Table 1 at a SV of 5,000 hr⁻¹, 10,000 hr⁻¹ or 30,000 hr⁻¹ to evaluate the catalyst activity for ammonia decomposition. The result was shown in Table 1.

### Example 2

480 g of an ammonia decomposition catalyst powder containing 3.0% by mass of copper and 100 ppm of Pt was obtained in the same manner as in Example 1 except that 500 g of "β zeolite" (Si/Al molar ratio: 25, specific surface area: 250 m²/g, average particle diameter: 3.8 µm, product number: H-BEA-25, produced by SUED CHEMIE AG) was used as a porous silica alumina. This ammonia decomposition catalyst powder was deposited on a honeycomb by wash-coating method in an amount of 49 g per liter of the honeycomb. This was called honeycomb catalyst B. An alumina sol, used as binder, was added so that it became 10% by mass relative to the amount of ammonia decomposition catalyst powder.

Honeycomb catalyst B was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Example 3

490 g of an ammonia decomposition catalyst containing 2.8% by mass of copper and 100 ppm of Pt was obtained in the same manner as in Example 1 except that 500 g of "mordenite type zeolite" (Si/Al molar ratio: 20, specific surface area: 400 m²/g, average particle diameter: 10 µm, product number: H-MOR-20, produced by SUED CHEMIE AG) was used as a porous silica alumina. This ammonia decomposition catalyst powder was deposited by wash-coating method on a honeycomb in an amount of 49 g per liter of the honeycomb. This was called honeycomb catalyst C. An alumina sol, used as binder, was added so that it became 10% by mass relative to the ammonia decomposition catalyst powder.

Honeycomb catalyst C was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Example 4

480 g of an ammonia decomposition catalyst powder containing 3.0% by mass of copper and 100 ppm of Pt was obtained in the same manner as in Example 1 except that 500 g of "Y type zeolite" (Si/Al molar ratio: 5, specific surface area: 210 m²/g, average particle diameter: 10 µm, product number: Y-400, produced by Mizusawa Industrial Chemicals, Ltd.) was used as a porous silica alumina. This ammonia decomposition catalyst powder was deposited by wash-coating method on a honeycomb in an amount of 50 g per liter of the honeycomb. This was called honeycomb catalyst D. An alumina sol, used as binder, was added so that it became 10% by mass relative to the ammonia decomposition catalyst powder.

Honeycomb catalyst D was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Example 5

490 g of an ammonia decomposition catalyst powder containing 2.8% by mass of iron and 100 ppm of Pt was obtained in the same manner as in Example 1 except that the Cu(NO₃)₂·3H₂O was replaced by 140 g of Fe(NO₃)₃·9H₂O (special grade chemical, produced by Wako Pure Chemical Industries, Itd.). This ammonia decomposition catalyst powder was deposited by wash-coating method on a honeycomb in an amount of 50 g per liter of the honeycomb. This was called honeycomb catalyst E. An alumina sol, used as binder, was added so that it became 10% by mass relative to the ammonia decomposition catalyst powder.

Honeycomb catalyst E was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Example 6

490 g of an ammonia decomposition catalyst powder containing 3.1 % by mass of cobalt and 100 ppm of Pt was obtained in the same manner as in Example 1 except that the Cu(NO₃)₂·3H₂O was replaced by 100 g of Co(NO₃)₂·6H₂O (special grade chemical, produced by Wako Pure Chemical Industries, Ltd.). This ammonia decomposition catalyst powder was deposited by wash-coating method on a honeycomb in an amount of 50 g per liter of the honeycomb. This was called honeycomb catalyst F. An alumina sol, used as binder, was added so that it became 10% by mass relative to the ammonia decomposition catalyst powder.

Honeycomb catalyst F was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Example 7

490 g of an ammonia decomposition catalyst powder containing 2.8% by mass of nickel and 100 ppm of Pt was obtained in the same manner as in Example 1 except that the Cu(NO₃)₂·3H₂O was replaced by 100 g of Ni(NO₃)₂·6H₂O (special grade chemical, produced by Wako Pure Chemical Industries, Ltd.). This ammonia decomposition catalyst powder was deposited by wash-coating method on a honeycomb in an amount of 50 g per liter of the honeycomb. This was called honeycomb catalyst G. An alumina sol, used as binder, was added so that it became 10% by mass relative to the ammonia decomposition catalyst powder.

Honeycomb catalyst G was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Example 8

480 g of an ammonia decomposition catalyst powder containing 3.0% by mass of copper and 100 ppm of Pd was obtained in the same manner as in Example 1 except that the raw material for noble metal element was replaced by palladium chloride. This ammonia decomposition catalyst powder was deposited by wash-coating method on a honeycomb in an amount of 49 g per liter of the honeycomb. This was called honeycomb catalyst H. An alumina sol, used as binder, was added so that it became 10% by mass relative to the ammonia decomposition catalyst powder.

Honeycomb catalyst H was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Example 9

500 g of an ammonia decomposition catalyst powder containing 3.0% by mass of copper and 100 ppm of Rh was obtained in the same manner as in Example 1 except that the raw material for noble metal element was replaced by rhodium chloride. This ammonia decomposition catalyst powder was deposited by wash-coating method on a honeycomb in an amount of 50 g per liter of the honeycomb. This was called honeycomb catalyst I. An alumina sol, used as binder, was added so that it became 10% by mass relative to the ammonia decomposition catalyst powder.

Honeycomb catalyst I was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Example 10

500 g of an ammonia decomposition catalyst powder containing 3.0% by mass of copper and 100 ppm of Ru was obtained in the same manner as in Example 1 except that the raw material for noble metal element was replaced by ruthenium chloride. This ammonia decomposition catalyst powder was deposited by wash-coating method on a honeycomb in an amount of 50 g per liter of the honeycomb. This was called honeycomb catalyst J. An alumina sol, used as binder, was added so that it became 10% by mass relative to the ammonia decomposition catalyst powder.

Honeycomb catalyst J was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Example 11

500 g of an ammonia decomposition catalyst powder containing 3.0% by mass of copper and 100 ppm of Ir was obtained in the same manner as in Example 1 except that the raw material for noble metal element was replaced by iridium chloride. This ammonia decomposition catalyst powder was deposited by wash-coating method on a honeycomb in an amount of 50 g per liter of the honeycomb. This was called honeycomb catalyst K. An alumina sol, used as binder, was added so that it became 10% by mass relative to the ammonia decomposition catalyst powder.

Honeycomb catalyst K was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Comparative Example 1

500 g of an ammonia decomposition catalyst powder containing 3.0% by mass of copper was obtained in the same manner as in Example 1 except that no Pt was added. This ammonia decomposition catalyst powder was deposited by wash-coating method on a honeycomb in an amount of 50 g per liter of the honeycomb. This was called honeycomb catalyst L. An alumina sol, used as binder, was added so that it became 10% by mass relative to the ammonia decomposition catalyst powder.

Honeycomb catalyst L was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1. For reference, an ammonia-containing gas was passed through the reactor at a given temperature shown in Table 1 at a SV of 5,000 hr⁻¹ to evaluate the catalyst activity for ammonia decomposition. The result was also shown in Table 1.

### Comparative Example 2

500 g of an ammonia decomposition catalyst powder containing 3.0% by mass of copper and 0.1 % by mass of Pt was obtained in the same manner as in Example 1 except that the Pt content was 0.1% by mass. This ammonia decomposition catalyst powder was deposited by wash-coating method on a honeycomb in an amount of 50 g per liter of the honeycomb. This was called honeycomb catalyst M. An alumina sol, used as binder, was added so that it became 10% by mass relative to the ammonia decomposition catalyst powder.

Honeycomb catalyst M was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Comparative Example 3

94 g of ZSM-5 zeolite was treated with 30 ml of an aqueous copper nitrate solution containing 3 g of copper by impregnation method, to load the copper on the zeolite. The copper-loaded zeolite was calcined at 500°C to obtain the raw powder of the ammonia decomposition catalyst resulted by an impregnation method. Then, the raw catalyst powder was impregnated with dinitrodiamine platinum, followed by calicining at 500°C for 12 hours, which resulted in the formation of 90 g of an ammonia decomposition catalyst powder containing 2.5% by mass of copper and 100 ppm of Pt. This ammonia decomposition catalyst powder was deposited by wash-coating method on a honeycomb in an amount of 50 g per liter of the honeycomb. This was called honeycomb catalyst N. An alumina sol, used as binder, was added so that it became 10% by mass relative to the ammonia decomposition catalyst powder.

Honeycomb catalyst N was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Comparative Example 4

480 g of an ammonia decomposition catalyst containing 2.3% by mass of copper and 100 ppm of Pt was obtained in the same manner as in Example 1 except that 500 g of "ZSM-5 zeolite" (Si/Al molar ratio: 95, specific surface area: 400 m²/g, average particle diameter: 70 µm, product number: H-MFI-90, produced by SUED CHEMIE AG) was used as a porous silica alumina. This ammonia decomposition catalyst powder was deposited by wash-coating method on a honeycomb in an amount of 50 g per liter of the honeycomb. This was called honeycomb catalyst O. An alumina sol, used as binder, was added so that it became 10% by mass relative to the ammonia decomposition catalyst powder.

Honeycomb catalyst O was packed in the above-mentioned normal-pressure flow type reactor (stainless steel-made reactor). An ammonia-containing gas was passed through the reactor at given temperatures shown in Table 1 at a GHSV of 10,000 hr⁻¹ to evaluate the catalyst activity for ammonia decomposition. The result was shown in Table 1.

### Comparative Example 5

490 g of an ammonia decomposition catalyst containing 1.8% by mass of copper and 100 ppm of Pt was obtained in the same manner as in Example 1 except that 500 g of "β zeolite" (Si/Al molar ratio: 150, specific surface area: 620 m²/g, average particle diameter: 45 µm, product number: H-BEA-150, produced by SUED CHEMIE AG) was used as a porous silica alumina. This ammonia decomposition catalyst powder was deposited by wash-coating method on a honeycomb in an amount of 50 g per liter of the honeycomb. This was called honeycomb catalyst P. An alumina sol, used as binder, was added so that it became 10% by mass relative to the ammonia decomposition catalyst powder.

Honeycomb catalyst P was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Comparative Example 6

As ammonia decomposition catalyst, a commercially available, copper oxide-manganese oxide complex oxide catalyst (copper oxide content: 25% by mass, manganese oxide content: 75% by mass, product number: N-140, produced by SUED-CHEMIE CATALYSTS) was used. This complex oxide catalyst powder was deposited by wash-coating method on a honeycomb in an amount of 50 g per liter of the honeycomb. This was called honeycomb catalyst Q. An alumina sol, used as binder, was added so that it became 10% by mass relative to the ammonia decomposition catalyst powder.

Honeycomb catalyst Q was packed in the above-mentioned normal-pressure flow type reactor (stainless steel-made reactor). An ammonia-containing gas was passed through the reactor at given temperatures shown in Table 1 at a SV of 10,000 hr⁻¹ to evaluate the catalyst activity for ammonia decomposition. The result was shown in Table 1.

### Comparative Example 7

490 g of an ammonia decomposition catalyst powder containing 0.1% by mass of platinum was obtained in the same manner as in Comparative Example 1 except that the Cu(NO₃)₂-3H₂O was replaced by 1.1 g of dinitrodiamine platinum (Pt content: 4.57% by weight, produced by Tanaka Kinzoku Kogyo K.K.). This ammonia decomposition catalyst powder was deposited by wash-coating method on a honeycomb in an amount of 50 g per liter of the honeycomb. This was called honeycomb catalyst R. An alumina sol, used as binder, was added so that it became 10% by mass relative to the ammonia decomposition catalyst powder.

[Table 1]

**[Table 1]**

| | Ammonia decomposition catalyst | | | Treating conditions | | Outlet gas analysis | | |
|---|---|---|---|---|---|---|---|---|
| | Carrier | Metal element | Noble metal Element | Temp. | SV | NH₃ | N₂O | NOx |
| | | | | °C | hr⁻¹ | ppm | ppm | ppm |
| Example 1 | ZSM-5 | | | 300 | 5000 | 0 | 0 | 0 |
| | | Cu | Pt | 300 | 10000 | 0 | 0 | 0 |
| | | 3.0 wt% | 100 ppm | 350 | 10000 | 0 | 0 | 0 |
| | | | | 300 | 30000 | 0 | 0 | 0 |
| Example 2 | β | Cu | Pt | 300 | 10000 | 0 | 0 | 0 |
| | | 3.0 wt% | 100 ppm | 350 | 10000 | 0 | 0 | 0 |
| Example 3 | Mordenite | Cu | Pt | 300 | 10000 | 0 | 0 | 0 |
| | | 2.8wt% | 100 ppm | 350 | 10000 | 0 | 0 | 0 |
| Example 4 | Y | Cu | Pt | 300 | 10000 | 0 | 0 | 0 |
| | | 3.0wt% | 100 ppm | 350 | 10000 | 0 | 0 | 0 |
| Example 5 | ZSM-5 | Fe | Pt | 300 | 10000 | 0 | 3 | 0 |
| | | 2.8wt% | 100 ppm | 350 | 10000 | 0 | 0 | 0 |
| Example 6 | ZSM-5 | Co | Pt | 300 | 10000 | 2 | 5 | 0 |
| | | 3.1wt% | 100 ppm | 350 | 10000 | 0 | 0 | 0 |
| Example 7 | ZSM-5 | Ni | Pt | 300 | 10000 | 1 | 0 | 0 |
| | | 2.8wt% | 100 ppm | 350 | 10000 | 0 | 0 | 0 |
| Example 8 | ZSM-5 | Cu | Pt | 300 | 10000 | 0 | 0 | 0 |
| | | 3.0wt% | 100 ppm | 350 | 10000 | 0 | 0 | 0 |
| Example 9 | ZSM-5 | Cu | Pt | 300 | 10000 | 0 | 0 | 0 |
| | | 3.0wt% | 100 ppm | 350 | 10000 | 0 | 0 | 0 |

**[Table 2]**

| Table 1 (continued) | | | | | | | | | |
|---|---|---|---|---|---|---|---|---|---|
| | Ammonia decomposition catalyst | | | | Treating conditions | | Outlet gas analysis | | |
| | Carrier | Metal element | | Noble metal Element | Temp. | SV | NH₃ | N₂O | NOx |
| | | | | | °C | hr⁻¹ | ppm | ppm | ppm |
| Example 10 | ZSM-5 | Cu 3.0 wt% | | Ru 100 ppm | 300 | 10000 | 0 | 1 | 0 |
| | | | | | 350 | 10000 | 0 | 0 | 0 |
| Example 11 | ZSM-5 | Cu 3.0 wt% | | Ir 100 ppm | 300 | 10000 | 0 | 2 | 0 |
| | | | | | 350 | 10000 | 0 | 0 | 0 |
| Comparative Example 1 | ZSM-5 | Cu 3.0 wt% | | - | 300 | 5000 | 3 | 0 | 1 |
| | | | | | 300 | 10000 | 110 | 0 | 20 |
| | | | | | 350 | 10000 | 10 | 0 | 0 |
| Comparative Example 2 | ZSM-5 | Cu 3.0 wt% | | Pt 0.1 wt. % | 300 | 10000 | 5 | 177 | 10 |
| | | | | | 350 | 10000 | 3 | 151 | 80 |
| Comparative Example 3 | ZSM-5 | Cu (imp.) 2.5 wt% | | Pt 100 ppm | 300 | 10000 | 320 | 30 | 0 |
| | | | | | 350 | 10000 | 98 | 20 | 35 |
| Comparative Example 4 | ZSM-5 (70µm) | Cu 2.3 wt% | | Pt: 100 ppm | 300 | 10000 | 110 | 45 | 0 |
| | | | | | 350 | 10000 | 28 | 16 | 30 |
| Comparative Example 5 | β | Cu 3.0 wt% | | Pt 100 ppm | 300 | 10000 | 110 | 45 | 0 |
| | | | | | 350 | 10000 | 37 | 19 | 20 |
| Comparative Example 6 | | Cu/Mn oxide | | - | 300 | 10000 | 0 | 3000 | 50 |
| | | | | | 350 | 10000 | 0 | 2100 | 260 |
| Comparative Example 7 | ZSM-5 | - | | Pt 0.1 wt% | 300 | 10000 | 0 | 140 | 3 |
| | | | | | 350 | 10000 | 0 | 180 | 10 |

| | | | | | | | | | |
|---|---|---|---|---|---|---|---|---|---|
| Note: Si/Al of ZSM-5: 95 in Comparative Example 4 (H-MFI-90) and 30 in others (H-MFI-30) | | | | | | | | | |

### Industrial Applicability

The ammonia decomposition catalyst of the present invention can decompose the ammonia present in a gas containing ammonia at % level almost completely and generates no harmful component such as NOx even at high-temperature decomposition of ammonia,. Therefore, the ammonia decomposition catalyst and the process of ammonia decomposition using the catalyst, both of the present invention, are useful for making waste gas containing a high concentration of ammonia harmless and can contribute greatly in related industries.

## Claims

1. An ammonia decomposition catalyst used for catalytic decomposition of ammonia present in a gas containing 0.005 to 5% by volume of ammonia, **characterized in that** the catalyst comprises at least one metal element selected from Fe, Co, Ni and Cu, loaded by ion exchange method on a porous silica alumina carrier which is an atomic Si/Al ratio of 1 to 90 and a specific surface area of 200 to 900 m²/g, and further comprises at least one noble metal element selected from Ru, Rh, Pd, Ir and Pt in an amount of 10 to 500 ppm based on the total mass of the catalyst.

2. The ammonia decomposition catalyst according to Claim 1, wherein the at least one metal element selected from Fe, Co, Ni and Cu is contained in an amount of 0.05 to 10% by mass based on the total mass of the catalyst.

3. The ammonia decomposition catalyst according to Claim 1, wherein the porous silica alumina has an average particle diameter of 0.1 to 20 µm.

4. A process for decomposition of ammonia by contacting a gas containing 0.005 to 5% by volume of ammonia with a catalyst to decompose catalytically the ammonia, **characterized in that** an ammonia decomposition catalyst according to any one of Claims 1 to 3 as the catalyst.
